# EUROPEAN PATENT SPECIFICATION

(11) **EP 3 420 664 B1**
(45) Date of publication and mention of the grant of the patent: **09.08.2023**
(21) Application number: 17775928.9
(22) Date of filing: 31.03.2017
(51) Int. Cl.: H04L 5/00, H04L 1/00, H04L 1/18, H04L 1/20, H04W 72/04, H04W 4/70, H04W 72/12, H04W 72/1273, H04L 41/0853, H04L 43/0864, H04L 67/104

(54) **METHOD AND APPARATUS FOR PROVIDING DIFFERENT SERVICES IN MOBILE COMMUNICATION SYSTEM**
VERFAHREN UND VORRICHTUNG ZUR BEREITSTELLUNG VON UNTERSCHIEDLICHEN DIENSTEN IN EINEM MOBILKOMMUNIKATIONSSYSTEM
PROCÉDÉ ET APPAREIL POUR FOURNIR DIFFÉRENTS SERVICES DANS UN SYSTÈME DE COMMUNICATION MOBILE

(30) Priority: 31.03.2016 KR 20160039730
(43) Date of publication of application: 02.01.2019
(73) Proprietor: Samsung Electronics Co., Ltd., Suwon-si, Gyeonggi-do 16677 (KR)
(72) Inventor: KIM, Kyeongyeon, Suwon-si, Gyeonggi-do 16677 (KR); HONG, Sungnam, Suwon-si, Gyeonggi-do 16677 (KR); KIM, Taeyoung, Suwon-si, Gyeonggi-do 16677 (KR); KIM, Chanhong, Suwon-si, Gyeonggi-do 16677 (KR); SEOL, Jiyun, Suwon-si, Gyeonggi-do 16677 (KR); LEE, Keonkook, Suwon-si, Gyeonggi-do 16677 (KR)
(74) Representative: Nederlandsch Octrooibureau
(86) International application number: PCT/KR2017/003599
(87) International publication number: WO 2017/171504

(56) References cited:
- US-A1- 2013 242 926
- US-A1- 2014 198 776
- US-A1- 2015 334 709
- PHILIPS: "Handling of Measurement Periods for Enhanced Uplink", 3GPP DRAFT; R1-041219, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20040916, 16 September 2004 (2004-09-16), XP050099413, [retrieved on 2004-09-16]
- NOKIA: "Compressed Mode with CPC", 3GPP DRAFT; R1-063333, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Riga, Latvia; 20061101, 1 November 2006 (2006-11-01), XP050103777, [retrieved on 2006-11-01]
- ZTE: "L1 considerations on latency reduction", 3GPP DRAFT; R1-157151 L1 CONSIDERATIONS ON LATENCY REDUCTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151115 - 20151122 15 November 2015 (2015-11-15), XP051003410, Retrieved from the Internet: URL:http://www.3gpp.org/ftp/Meetings_3GPP_ SYNC/RAN1/Docs/ [retrieved on 2015-11-15]
- HUAWEI ET AL.: 'Short TTI for DL transmissions' RI-160292, 3GPP TSG RAN WG1 MEETING #84 06 February 2016, XP051064110
- '3GPP; TSG RAN; Study on Scenarios and Requirements for Next Generation Access Technologies; (Release 14' 3GPP TR 38.913 30 March 2016, XP051172919

## Description

### Technical Field

The present disclosure relates to a mobile communication system. More particularly, the present disclosure relates to a method and apparatus for providing different services in a mobile communication system.

### Background Art

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a `Post LTE System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid FSK and QAM Modulation (FQAM) and sliding window superposition coding (SWSC) as an advanced coding modulation (ACM), and filter bank multi carrier(FBMC), non-orthogonal multiple access(NOMA), and sparse code multiple access (SCMA) as an advanced access technology have been developed.

Meanwhile, systems for Enhanced Mobile Broadband (eMBB), Ultra-Reliable and Low-Latency Communications (URLLC), and Massive Machine-Type Communications (massive MTC) are under consideration for 5G communications.

A URLLC system is a system designed to provide a highly reliable and low latency service. Such a URLLC system may be used to provide self-driving, e-health, and drone services (hereinafter, a service provided by the URLLC system may be referred to as a URLLC service).

Specifically, as a URLLC service requires very low latency (e.g. user plane latency in the order of 1 ms), a short transmission time interval (TTI) of 0.1 ms may be used.

Such TTI configuration may be changed. For example, the TTI configuration may be changed according to the frame structure and hybrid ARQ round trip time (RTT). For a self-contained frame structure, the TTI may be 0.2 ms.

In addition, as a URLLC service requires not only low latency but also stringent reliability, a large bandwidth is required for transmission in comparison to the packet size. For example, when a packet carries 100 to 1000 bits, to meet the end-to-end latency requirement of 1 ms (e.g. factory automation) and the packet error rate (PER) requirement of 10-9, a bandwidth of 8 MHz is needed for one packet of 1000 bits in the case of 16-level diversity. With the increasing bandwidth, the packet drop rate decreases for satisfaction of the stringent latency requirement. Hence, when the transmission bandwidth increases, the increase in the URLLC system capacity may become larger. For example, when 40 terminals each transmit at a rate of 1 Mbps under a U-plane latency constraint of 1 ms and a reliability constraint of 10-4, a twofold increase in the bandwidth from 10 MHz to 20 MHz may result in a threefold or more increase in the system capacity.

PHILIPS: "Handling of Measurement Periods for Enhanced Uplink", 3GPP DRAFT; R1-041219, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 16 September 2004, discloses packet scheduling in overlapping TTIs.

### Disclosure of Invention

### Technical Problem

However, when dedicated resources are used to provide URLLC services, as the bandwidth demand increases, it may be not possible to efficiently utilize the limited frequencies.

Hence, it is necessary to develop a scheme that can provide a URLLC service by using resources coexistent with resources used to provide other services.

In addition, when a URLLC service is provided using resources coexistent with resources used to provide a different service, the different service may experience performance degradation. Hence, it is necessary to develop a scheme to solve this problem.

### Solution to Problem

The object of the invention is achieved by the subject-matter of the independent claims. The dependent claims describe advantageous embodiments. The scope of protection of the invention is solely limited by the appended claims.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### Advantageous Effects of Invention

In a feature of the present disclosure, resources used to offer a URLLC service coexist with resources used to offer a different service, increasing the efficiency of frequency usage. Additionally, when resources used to provide a URLLC service coexist with resources used to provide a different service, it is possible to reduce performance degradation of the different service.

### Brief Description of Drawings

For a more complete understanding of the present disclosure and its advantages, reference is now made to the following description taken in conjunction with the accompanying drawings, in which like reference numerals represent like parts:
FIG. 1A illustrates a scheme for providing a URLLC service using resources coexistent with resources used to provide an eMBB service according to an embodiment of the present disclosure.
FIG. 1B illustrates another scheme for providing a URLLC service using resources coexistent with resources used to provide an eMBB service according to an embodiment of the present disclosure.
FIG. 2A illustrates a result of comparison between terminal performance when the eMBB terminal is aware of puncturing and when the eMBB terminal is unaware of puncturing.
FIG. 2B illustrates performance degradation of the eMBB terminal according to the amount of puncturing.
FIG. 3 illustrates a method for providing different services according to an embodiment of the present disclosure.
FIG. 4 illustrates puncturing information according to an embodiment of the present disclosure.
FIG. 5 illustrates interference caused by data overlap to the terminal according to an embodiment of the present disclosure.
FIG. 6A illustrates signaling between terminals and base station when terminal decoding capability information contains information on a receiver utilizing statistical properties of interference.
FIG. 6B illustrates signaling between terminals and base station when terminal decoding capability information contains information on a receiver utilizing an interference signal itself.
FIG. 7 illustrates a scheme of the base station to transmit scheduling information to a terminal according to an embodiment of the present disclosure.
FIG. 8A illustrates a scheme for a first terminal to receive data according to scheduling information from the base station.
FIG. 8B illustrates a scheme for a second terminal to receive data according to scheduling information from the base station.
FIG. 9 illustrates a frame structure including a first system resource region and a second system resource region.
FIG. 10 illustrates system performance when the proposed method is applied.
FIG. 11A is a block diagram of a base station according to an embodiment of the present disclosure.
FIG. 11B illustrates a configuration of the scheduler according to an embodiment of the present disclosure.
FIG. 12 illustrates a terminal according to an embodiment of the present disclosure.

### Mode for the Invention

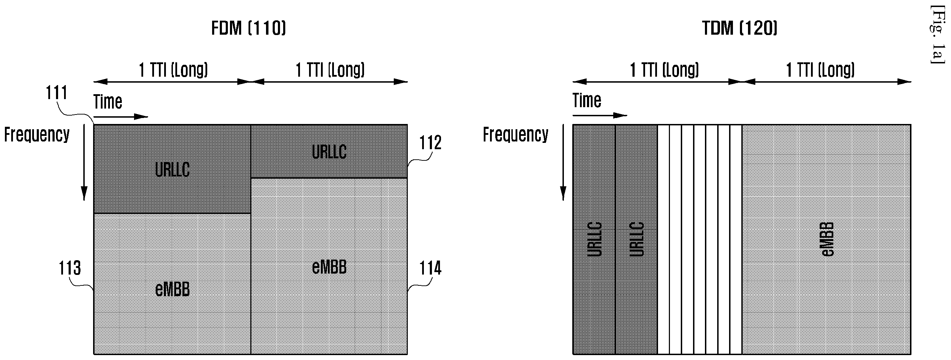

FIGURES 1A through 12, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device.

Hereinafter, embodiments of the present disclosure are described in detail with reference to the accompanying drawings.

Detailed descriptions of well-known functions and structures incorporated herein may be omitted to avoid obscuring the subject matter of the present disclosure. Descriptions of functions and structures well known in the art and not directly related to the present disclosure may also be omitted for clarity and conciseness.

In the drawings, some elements are exaggerated, omitted, or only outlined in brief, and thus may be not drawn to scale. The same or similar reference symbols are used throughout the drawings to refer to the same or like parts.

The aspects, features and advantages of certain embodiments of the present disclosure will be more apparent from the following detailed description taken in conjunction with the accompanying drawings. The description of the various embodiments is to be construed as exemplary only and does not describe every possible instance of the present disclosure. It should be apparent to those skilled in the art that the following description of various embodiments of the present disclosure is provided for illustration purpose only and not for the purpose of limiting the present disclosure as defined by the appended claims and their equivalents. The same reference symbols are used throughout the description to refer to the same parts.

Meanwhile, it is known to those skilled in the art that blocks of a flowchart (or sequence diagram) and a combination of flowcharts may be represented and executed by computer program instructions. These computer program instructions may be loaded on a processor of a general purpose computer, special purpose computer or programmable data processing equipment. When the loaded program instructions are executed by the processor, they create a means for carrying out functions described in the flowchart. As the computer program instructions may be stored in a computer readable memory that is usable in a specialized computer or a programmable data processing equipment, it is also possible to create articles of manufacture that carry out functions described in the flowchart. As the computer program instructions may be loaded on a computer or a programmable data processing equipment, when executed as processes, they may carry out steps of functions described in the flowchart.

A block of a flowchart may correspond to a module, a segment or a code containing one or more executable instructions implementing one or more logical functions, or to a part thereof. In some cases, functions described by blocks may be executed in an order different from the listed order. For example, two blocks listed in sequence may be executed at the same time or executed in reverse order.

In the description, the word "unit", "module" or the like may refer to a software component or hardware component such as an FPGA or ASIC capable of carrying out a function or an operation. However, "unit" or the like is not limited to hardware or software. A unit or the like may be configured so as to reside in an addressable storage medium or to drive one or more processors. Units or the like may refer to software components, object-oriented software components, class components, task components, processes, functions, attributes, procedures, subroutines, program code segments, drivers, firmware, microcode, circuits, data, databases, data structures, tables, arrays or variables. A function provided by a component and unit may be a combination of smaller components and units, and may be combined with others to compose large components and units. Components and units may be configured to drive a device or one or more processors in a secure multimedia card.

FIG. 1A illustrates a scheme for providing a URLLC service using resources coexistent with resources used to provide an eMBB service according to an embodiment of the present disclosure.

When the base station uses dedicated resources to provide a URLLC service, the bandwidth required for the URLLC service significantly increases. Hence, to efficiently utilize available frequencies, it is necessary to develop a scheme for providing a URLLC service using resources coexistent with resources allocated to provide a different service. For ease of description, it is assumed that resources to provide an eMBB service coexist with resources to provide a URLLC service. However, the present disclosure is not limited thereto or thereby. For example, a URLLC service may be provided using resources coexistent with resources to provide MBB and LTE services.

As a long TTI is used for the eMBB service and a short TTI is used for the URLLC service, multiple TTIs may be used for coexistence between resources to provide the URLLC service and resources to provide the eMBB service (may be referred to as coexistence between the URLLC service and the eMBB service for short). Here, the TTI may indicate the time unit for resource allocation, and the hybrid ARQ round trip time (RTT) and scheduling request time may be defined using an integer multiple of the TTI.

When multiple TTIs are used together, time units of at least two systems may differ. The base station may configure two or more actions for the at least two systems. The terminal (user equipment, UE) may operate as a single system or operate as two or more systems, and the base station may configure the terminal to operate as a single system or as two or more systems depending on the situations. That is, an eMBB terminal operating as an eMBB system (or using an eMBB service) and a URLLC terminal operating as a URLLC system (or using a URLLC service) may be different terminals. Or, a single terminal may operate as an eMBB terminal or as a URLLC terminal. For ease of description, it is assumed that an eMBB terminal operating as an eMBB system and a URLLC terminal operating as a URLLC system are different terminals.

Multiple TTIs may be multiplexed in the time domain or in the frequency domain. Resource regions may be configured semi-statically with respect to a long TTI and a short TTI, and resource allocation may be made within each resource region.

Referring to FIG. 1A, in a FDM scheme 110, the resources may be partitioned in the frequency domain into short TTI resources and long TTI resources, and the long TTI resources and the short TTI resources may be multiplexed in a FDM manner.

When the resources are partitioned in the frequency domain, the frequency bands 111 and 112 available to the URLLC system (or URLLC service) may be limited compared to the whole frequency band, and the URLLC system may be not allowed to use the frequency bands 113 and 114 used by the eMBB system. That is, the URLLC service is not provided in the frequency band allocated to the eMBB service. FDM multiplexing may be not efficient for increasing the URLLC system capacity.

In a TDM scheme 120, the resources may be partitioned in the time domain into short TTI resources and long TTI resources, and the long TTI resources and the short TTI resources may be multiplexed in a TDM manner.

When the resources are partitioned in the time domain, as the RTT depends on the long TTI, the effect of latency reduction due to usage of a short TTI may diminish. Additionally, as scheduling of the URLLC service is postponed until the short TTI interval is reached, the availability of the URLLC service may decrease.

In the case of FDM or TDM multiplexing with respect to the long TTI, when a time critical service is requested, it may be difficult to acquire available resources corresponding to a change in the amount of resources. Hence, when a terminal using a short TTI is connected while operating with respect to a long TTI, it is possible to use a scheme that interrupts data transmission to a terminal using the long TTI (puncturing) and provides a requested service to the terminal using the short TTI.

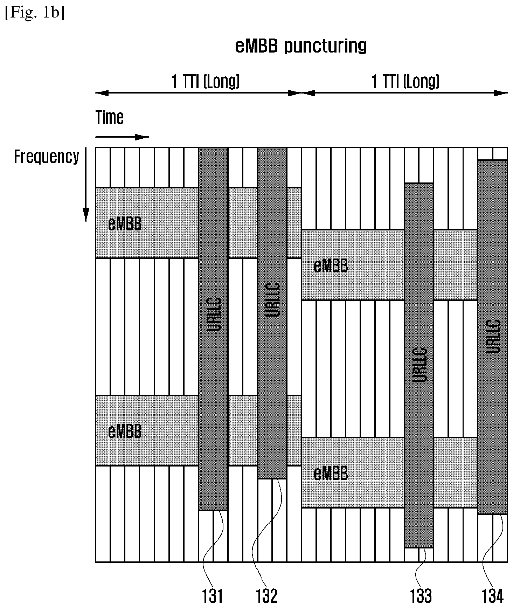

FIG. 1B illustrates another scheme for providing a URLLC service using resources coexistent with resources used to provide an eMBB service according to an embodiment of the present disclosure.

Referring to FIG. 1B, the base station may partition the resources with respect to the eMBB service using the long TTI. When a URLLC terminal connects to the base station to receive a URLLC service using the short TTI, the base station may interrupt the eMBB service through puncturing and provide a URLLC service to the URLLC terminal.

When a URLLC terminal is connected, the base station may allocate resources to the URLLC terminal first (as indicated by indicia 131, 132, 133, or 134). Here, the resource region allocated first to the URLLC terminal may be referred to as a URLLC resource region. The size of the frequency domain assigned to the URLLC resource region may be preset or may be determined according to the amount of data for the URLLC service. The portion of the URLLC resource region overlapping the resource region allocated to the eMBB system may be referred to as a collision region.

When a URLLC terminal is connected, the base station may puncture data transmission to the eMBB terminal in the collision region and transmit data to the URLLC terminal only. Preferential resource allocation to the URLLC terminal may benefit the URLLC service, but the eMBB system may experience performance degradation when the number of connected URLLC terminals increases.

Specifically, when the eMBB terminal is unaware that data is punctured at a portion of resources allocated thereto (in the collision region), the eMBB terminal may mistake URLLC service data as its data and fail to decode eMBB service data. Although the eMBB terminal is aware that data is punctured in the collision region, the eMBB terminal may suffer severe performance degradation when the amount of punctured resources increases.

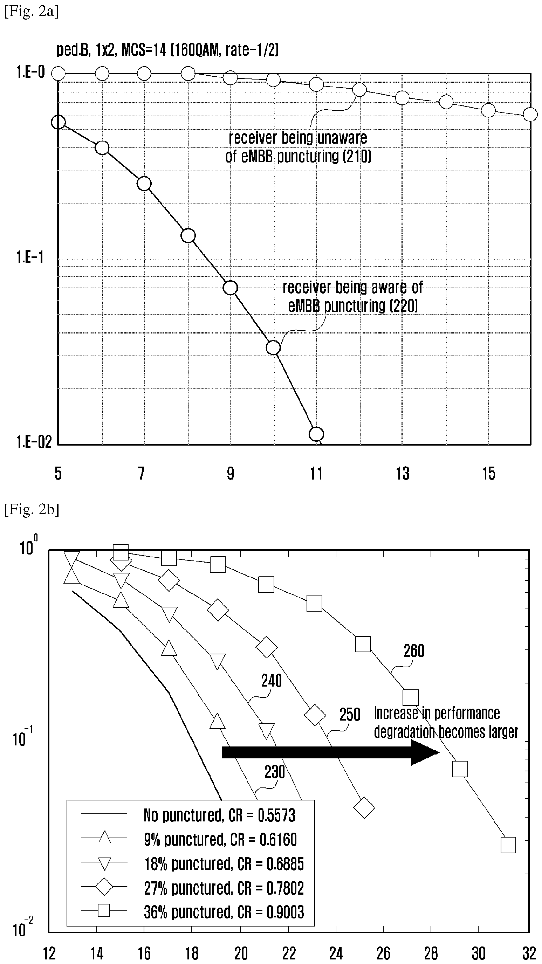

FIGS. 2A and 2B illustrate performance degradation of the eMBB terminal when resources allocated for the eMBB service coexist with resources allocated for the URLLC service.

FIG. 2A illustrates performance of the eMBB terminal according to whether it is aware of puncturing.

In FIG. 2A, graph 210 depicts the performance of the eMBB terminal when it is unaware that a portion of the allocated resource region is punctured. When the eMBB terminal is unaware of puncturing, it may mistake URLLC data as its data and fail to decode eMBB data. Hence, it can be seen that the block error rate (BLER) hardly decreases with the increasing SNR (signal-to-noise ratio).

On the other hand, graph 220 depicts the performance of the eMBB terminal when it is aware that a portion of the allocated resource region is punctured. It can be seen that the block error rate decreases with the increasing SNR. That is, the eMBB terminal can decode eMBB data, unlike the case of graph 210.

FIG. 2B illustrates performance degradation of the eMBB terminal according to the amount of puncturing.

FIG. 2B depicts the relationship between the SNR and the BLER at the receiving end of the eMBB terminal according to the amount of punctured resources. When the amount of punctured resources and the positions of the punctured resources are known to the receiving end of the eMBB terminal, this may have an effect corresponding to an increase in the effective coding rate (effect similar to that of rate matching performed at the transmitting end). Here, the amount of punctured resources relative to the total resources remains at an equivalent level, and the effective coding rate may be fixed regardless of modulation information.

It can be seen from FIG. 2B that the increase in performance degradation becomes larger with the increasing amount of punctured resources. Specifically, graph 230 depicts the relationship between the SNR and the BLER when 9 percent of the total resources are punctured; graph 240 depicts the relationship when 18 percent of the total resources are punctured; graph 250 depicts the relationship when 27 percent of the total resources are punctured; and graph 260 depicts the relationship when 36 percent of the total resources are punctured.

Comparison between graph 230 and graph 260 may reveal that the SNR value of graph 260 is greater than that of graph 230 for the same BLER value, and the increase in performance degradation of the eMBB terminal becomes larger with the increasing amount of punctured resources.

Accordingly, to reduce performance degradation of the eMBB terminal, the present disclosure proposes a scheme that enables the eMBB terminal to secure available resources by decreasing the amount of puncturing. To reduce the amount of puncturing when the same amount of data is transmitted, it is necessary to transmit data in an overlapping manner over some resources (referred to as an overlap region). The present disclosure proposes a scheme whereby data is transmitted in an overlapping manner in the overlap region of the collision region and the eMBB data is punctured with power adjustment in the remaining region of the collision region.

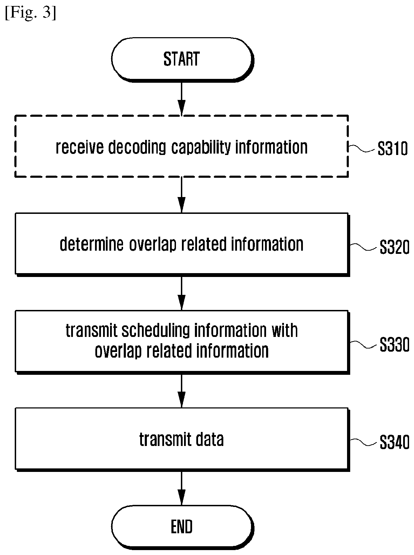

FIG. 3 illustrates a method for providing different services according to an embodiment of the present disclosure.

In the present embodiment, a description is given of a method for providing different services to coexisting systems employing different TTIs. Specifically, the method provides a first service to a first terminal of a first system employing a first TTI and provides a second service to a second terminal of a second system employing a second TTI. In the following description, to provide different services based on different TTIs, it is assumed that the first system is an eMBB system and the second system is a URLLC system; the first terminal is an eMBB terminal and the second terminal is a URLLC terminal; and the first service is an eMBB service and the second service is a URLLC service. However, the present disclosure is not limited thereto or thereby.

Referring to FIG. 3, at step S310, the base station may receive decoding capability information related to decoding capabilities of a terminal. The decoding capability information may include information on a receiver utilizing statistical properties of interference (e.g. non-Gaussian detection) or information on a receiver utilizing the interference signal itself (e.g. interference awareness detection (IAD) or interference cancellation (IC)). The overlap related information and signaling to a terminal may be varied according to decoding capability information of the terminal. This is described later.

Step S310 may be skipped and the base station may perform step S320 without receiving terminal decoding capability information.

Thereafter, at step S320, the base station may determine overlap related information.

Here, the overlap related information may include at least one of collision region information, inter-service power information, puncturing amount information, overlapping signal power information, puncturing information, and modulation information.

The collision region information may refer to information indicating, among resources allocated to the first terminal, the resource to be allocated to the second terminal in response to a request from the second system. For example, the collision region information may indicate the collision region 131, 132, 133 or 134 in FIG. 1B.

The inter-service power information may refer to information indicating the power ratio between the power assigned to the first service offered to the first system and the power assigned to the second service offered to the second system. Specifically, the inter-service power information may indicate the ratio between the power consumed to provide the first service and the power consumed to provide the second service in a region other than the collision region (referred to as a non-collision region).

The collision region information and inter-service power information may be determined when the second terminal connects to the base station.

In the overlap related information, the puncturing amount information, overlapping signal power information, and puncturing information may be determined based on the decoding capability information received from terminals and requirements of the second system. Here, the overlap related information may be determined based on the decoding capability information of the first terminal and second terminal. The requirements of the second system may include at least one of a reliability requirement and a latency requirement determined in advance.

The puncturing amount information may indicate the amount of resources to be punctured in the collision region for the first system data. When the puncturing amount information is determined, it is possible to determine the overlap amount information indicating the amount of resources in the overlap region of the collision region. For ease of description, the puncturing amount information is used as including the overlap amount information. Alternatively, the base station may determine the overlap amount information first and then determine the puncturing amount information.

The overlapping signal power information may indicate the power ratio in the overlap region. That is, while the inter-service power information indicates the ratio between the power consumed to provide the first service and the power consumed to provide the second service in the non-collision region, the overlapping signal power information indicates the ratio between the power consumed to provide the first service and the power consumed to provide the second service in the overlap region of the collision region. The inter-service power information is determined when the corresponding terminal is connected, and the base station may adjust the overlapping signal power information to minimize interference between terminals.

The puncturing information may indicate the ratio between the overlap amount and the puncturing amount in the collision region. The puncturing information may have a regular pattern or a randomized pattern. When the puncturing information is used at the receiving end, it may be limited to a regular pattern so as to reduce signaling information. For example, the puncturing information may be identified according to the remainder of the modulo operation on the ratio between the overlap amount and the puncturing amount. The puncturing information may be tabulated as a table, which can be stored in the base station or the terminal. When the puncturing information is randomized, it may have a pseudo random pattern including terminal-specific information. The base station may adjust the puncturing information, and may obtain diversity gain by adjusting puncturing information between interrupted short TTIs in the same long TTI or by changing puncturing information upon resumption of the second service.

Hence, the base station may identify the overlap region based on the puncturing information and transmit overlapping data in the overlap region to the first terminal and second terminal. Here, data for difference services using different TTIs may overlap, and service data is not allowed to overlap control information or reference signals (RS). In the downlink, a reference signal can be shared between the first system and the second system, but the base station cannot transmit a reference signal on the same resource in an overlapping manner.

The puncturing amount information, overlapping signal power information, and puncturing information may be determined based on the interference-to-noise power ratio and the cell occupancy of the first system at the time of transmitting the second system service. To assure reception performance of the second terminal, the puncturing amount information and overlapping signal power information may be determined based on the decoding capability information of the second terminal in consideration of the SIR and SNR of the second system.

For example, in an environment where noise predominates over interference or cell loading is low for every service, the whole collision region may be punctured and data may be sent without overlapping. That is, data may be transmitted without overlapping when the interference level is low or the number of connected second terminals is small.

In addition, the optimization level for assuring performance of the second system may be varied according to the latency criticality and reliability requirement of the second system.

To perform optimization under the allowed overlap amount selected according to the SNR and cell occupancy while assuring second system performance, it is possible to consider the terminal decoding capability as follows.

When interference is treated as noise, the base station may determine the overlap related information that satisfies the second system requirements and maximizes the first system performance by adjusting the power ratio between the first system and the second system. Here, as only the interference power level is considered, the base station may make the power difference between the two systems large and transmit modulation information of the system with a higher power to the system with a lower power. Thereby, the terminal with lower power assignment may perform interference cancellation.

When statistical properties of interference are utilized, the base station may determine the overlap related information maximizing the difference between statistical properties of interference and those of noise. For example, when noise follows a Gaussian distribution, the base station may determine the overlap related information such that interference follows a non-Gaussian distribution. Thereby, the terminal may avoid interference by use of a receiver utilizing statistical properties of interference (e.g. non-Gaussian detection).

When the receiving end detects the signal and interference jointly, it is possible to select the power level at overlapping so that the minimum distance is maximized while treating interference as a desired signal. That is, when the decoding capability information includes information on a receiver utilizing the interference signal itself, the base station may determine the overlap related information so that the minimum of the Euclidean distance is maximized under a maximum likelihood (ML) criterion.

Upon determining the overlap related information, at step S330, the base station may transmit the overlap related information and scheduling information to the terminal.

As described before, the overlap related information may include at least one of collision region information, inter-service power information, puncturing amount information, overlapping signal power information, puncturing information, and modulation information. The scheduling information to be sent to the terminal may include at least one piece of the above listed information.

The base station may transmit scheduling information containing overlap related information to the terminal, or may separately transmit scheduling information and overlap related information to the terminal.

Here, the decoding capability information may include at least one of information on a receiver utilizing statistical properties of interference and information on a receiver utilizing the interference signal itself. The information sent to the terminal may be varied according to the information contained in the decoding capability information.

For example, when the decoding capability information contains information on a receiver utilizing statistical properties of interference, the base station may transmit the collision region information and power information to the terminal and may not transmit the puncturing information.

After transmitting the scheduling information and overlap related information, at step S340, the base station may transmit data to the first terminal and the second terminal based on the overlap related information. The base station may transmit first service data in the non-collision region. The base station may transmit overlapping data in the overlap region of the collision region based on the puncturing information and overlapping signal information. The base station may transmit data to the second terminal only (not to the first terminal) on a resource in the non-overlap region of the collision region.

Upon reception of overlapping data, the terminal may group received signals into collision region signals and non-collision region signals by use of the collision region information received from the base station. Hence, the terminal may use a receiver utilizing statistical properties of interference to decode the signal received in the collision region, and use a receiver unconcerned about interference to decode the signal received in the non-collision region.

As another example, when the decoding capability information contains information on a receiver utilizing interference information, the base station may transmit the collision region information, power information, puncturing information, and modulation information to the terminal at step S330.

After transmitting the scheduling information and overlap related information, at step S340, the base station may transmit data to the first terminal and the second terminal based on the overlap related information. The base station may transmit overlapping data in the overlap region of the collision region based on the puncturing information and overlapping signal information. The base station may transmit data to the second terminal only (not to the first terminal) on a resource in the non-overlap region of the collision region.

Upon reception of the puncturing information and overlapping data, the terminal may group received signals into collision region signals and non-collision region signals by use of the puncturing information. Hence, the terminal may use a receiver applying IAD or IC to decode the signal received in the overlap region, and use a receiver unconcerned about interference to decode the signal received in the non-overlap region. Detailed operations of the terminal are described later.

The puncturing information may be determined by the ratio between the overlap amount and the puncturing amount in the collision region, and may include regular or randomized information. To transmit the puncturing information to the terminal, the base station may limit the puncturing information to a regular pattern so as to reduce signaling information. For example, the puncturing information may be identified according to the remainder of the modulo operation on the ratio between the overlap amount and the puncturing amount. The puncturing information may be tabulated as a table, which can be stored in the base station or the terminal. When the puncturing information is randomized, it may have a pseudo random pattern.

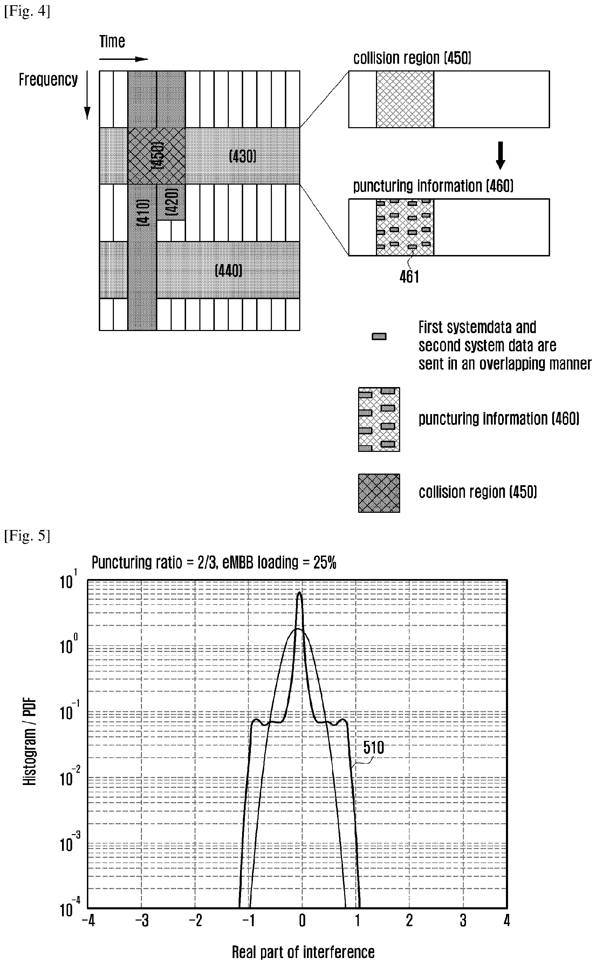

FIG. 4 illustrates puncturing information according to an embodiment of the present disclosure.

In FIG. 4, the first system may operate using a long TTI and the second system may operate using a short TTI.

For efficient use of frequencies, when a second terminal connects to the base station, the base station may allocate resources to the second terminal. Here, the resources allocated to the second terminal may be referred to as a second system resource region as indicated by indicia 410 or 420. Alternatively, when the second terminal makes a request for the second service or second service data is generated, the base station may allocate a second system resource region 410 or 420 to the second terminal.

In addition, among the resources allocated to the first system (referred to as a first system resource region as indicated by indicia 430 or 440), the base station may allocate some resources of the first system resource region 430 or 440 preferentially to the second terminal. Here, the portion of the second system resource region overlapping the first system resource region may be referred to as a collision region as indicated by indicia 450.

The collision region 450 may indicate a resource region where the first system data is punctured to assure performance of the second system. Hence, in the collision region, the base station may transmit not first system data but second system data, assuring performance of the second system.

In one embodiment, the puncturing information 460 may include information indicating resources in the collision region 450 to be used to transmit overlapping data. The puncturing information 460 may also include information indicating resources in the collision region 450 where data puncturing is to be performed.

When the puncturing information 460 includes information indicating resources in the collision region 450 to be used to transmit overlapping data, the base station may transmit first system data and second system data in an overlapping manner on a resource 461 indicated by the puncturing information. On the other hand, when the puncturing information 460 includes information indicating resources in the collision region 450 where data puncturing is to be performed, the base station may puncture first system data on a resource 461 indicated by the puncturing information and may transmit first system data and second system data in an overlapping manner on a resource other than the resource 461 in the collision region 450.

As described above, the base station may transmit first system data in the collision region under the condition of assuring performance of the second system. Thereby, it is possible to reduce the amount of punctured first system data, preventing performance degradation of the first system.

Here, as transmission of overlapping data may cause interference to the terminal, it is necessary to remove such interference.

FIG. 5 illustrates interference caused by data overlap to the terminal according to an embodiment of the present disclosure.

As described before, transmitting overlapping data in the collision region enables performance enhancement of the first system through reduction of punctured resources. The base station may adjust the power ratio between overlapping signals using the overlapping signal power information and may apply interference suppression, interference cancellation or joint detection of desired and interfering signals, thereby increasing system performance. In addition, the problem of interference caused by data overlapping may be solved by enabling each terminal to utilize an appropriate receiver or by enabling the base station to adjust the power of overlapping signals and puncturing information in consideration of the decoding capability of the second terminal so that the second terminal can remove interference.

Specifically, the base station may transmit the overlapping signal power information and puncturing information to the terminal according to the decoding capability information of the terminal. For example, when the decoding capability information includes information on a receiver utilizing the interference signal itself, the base station may adjust the overlapping signal power information and puncturing information for easy detection of an interference signal in consideration of the decoding capability of the terminal and transmit the adjusted overlapping signal power information and puncturing information to the terminal. The base station may also transmit the modulation information for the interference signal of the other terminal. Upon reception of the above information, the terminal may group received signals according to the overlapping signal power information and puncturing information and use different receivers for different signal groups to remove interference. The terminal may use a receiver utilizing the interference signal itself to detect an interference signal and detect the desired signal based on the detected interference signal. The terminal may also use the modulation information for the interference signal to detect the desired signal based on interference signal detection.

In the case of a terminal using a receiver utilizing statistical properties of interference, the base station may adjust the puncturing information and power ratio in consideration of the decoding capability of the terminal so that statistical properties of interference are changed to ease interference removal. Specifically, the base station may form a non-Gaussian interference channel through partial overlapping of data by use of non-Gaussian statistical properties of interference. Then, the terminal may use a receiver based on non-Gaussian decoding to remove interference.

Referring to FIG. 5, it is possible to make the interfering signal affecting the second terminal have a non-Gaussian property as indicated by indicia 510. For example, when the first system is at a low cell loading level and has a high puncturing ratio, the interfering signal caused by the first system tends to have a non-Gaussian property. Hence, the second terminal may use a receiver based on non-Gaussian properties to ensure acceptable performance.

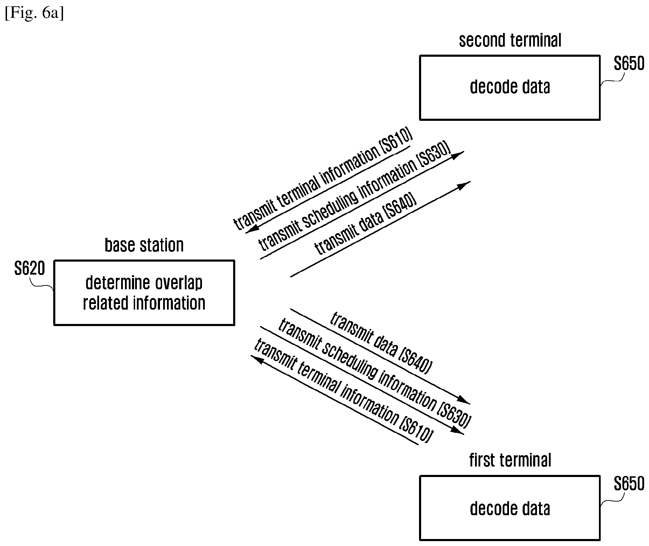

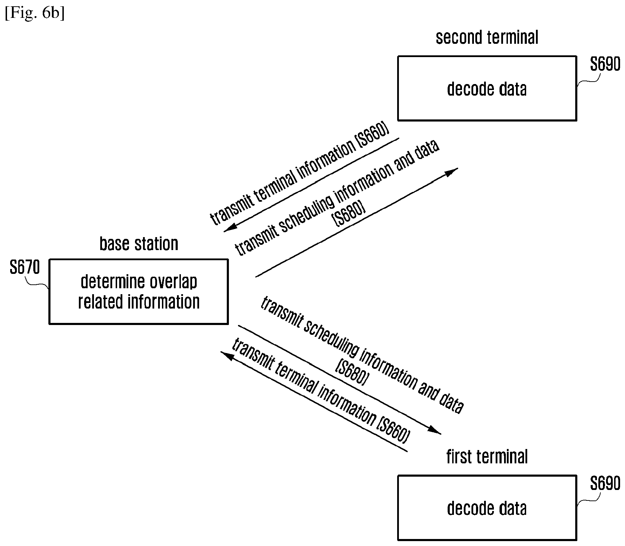

FIGS. 6A and 6B illustrate signaling between the terminals and base station according to terminal decoding capability information.

FIG. 6A illustrates signaling between the terminals and base station when terminal decoding capability information contains information on a receiver utilizing statistical properties of interference.

Referring to FIG. 6A, at step S610, the first terminal and the second terminal may transmit the base station terminal information containing decoding capability information. Step S610 may be skipped.

The decoding capability information may include information on a receiver utilizing statistical properties of interference or information on a receiver utilizing an interference signal itself. In the present embodiment, the decoding capability information is assumed to include information on a receiver utilizing statistical properties of interference.

Upon reception of terminal information, at step S620, the base station may determine the overlap related information based on requirements of the second system and the decoding capability information. The overlap related information may include at least one of collision region information, inter-service power information, puncturing amount information, overlapping signal power information, puncturing information, and modulation information.

Specifically, to satisfy the reliability requirement and latency requirement of the second system, the base station may determine the puncturing amount information based on the second system requirements and the decoding capability information of the second terminal. Here, when one of the overlap amount information and the puncturing amount information is determined, the other thereof may be determined by use of information on the amount of resources in the collision region.

Additionally, to satisfy the reliability requirement and latency requirement of the second system, the base station may determine the puncturing information and overlapping signal power information associated with a zone of the collision region where data overlapping or data puncturing is to be performed based on the second system requirements and the decoding capability information of the second terminal.

For example, when the decoding capability information includes information on a receiver that performs decoding by treating interference as noise or the base station has not received terminal information, the base station may increase the power ratio of the overlapping signal power information to ease separation of signals. Alternatively, the base station may determine the puncturing information and overlapping signal power information in such a way that statistical properties of interference are different from those of noise (e.g. making interference follow a non-Gaussian distribution).

Upon determining the overlap related information, at step S630, the base station may transmit the terminal scheduling information containing the overlap related information. Here, the base station may select the overlap related information for the scheduling information in consideration of the decoding capability information of the terminal. For example, when the decoding capability information includes information on a receiver utilizing statistical properties of interference, the base station may select the collision region information and inter-service power information as the overlap related information, which is to be contained in the scheduling information for transmission. However, the present disclosure is not limited thereto or thereby. The overlap related information to be sent to the terminal may further include at least one of the puncturing information, overlapping signal power information, and modulation information.

At step S640, the base station may transmit data to the terminal based on the overlap related information. The base station may transmit the first terminal and the second terminal overlapping data in the overlap region of the collision region based on the puncturing information contained in the overlap related information. The base station may puncture first terminal data in the non-overlap region of the collision region and transmit second terminal data based on the puncturing information.

At step S650, the terminal may receive data and decode the received data. Specifically, the first terminal may group resources in the collision region and select receivers for the groups. The terminal may decode received data based on the decoding capability information.

In the case that the decoding capability information includes information on a receiver utilizing statistical properties of interference, the first terminal may group resources into collision region resources (first group) and non-collision region resources (second group). The first terminal may use a receiver utilizing statistical properties of interference for the first group (e.g. non-Gaussian detection (NGD)) and use a receiver unconcerned about interference for the second group (e.g. Gaussian detection (GD)) to decode received data.

Meanwhile, the second terminal may receive data in the collision region and may receive overlapping data (first terminal data and second terminal data) in the overlap region. In consideration of interference caused by first terminal data, the second terminal may use a receiver utilizing statistical properties of interference to decode received data.

Alternatively, the second terminal may group resources in the collision region into overlap region resources and non-overlap region resources, and may use a receiver utilizing statistical properties of interference for the overlap region resources and use a receiver unconcerned about interference for the non-overlap region resources to decode received data.

FIG. 6B illustrates signaling between the terminals and base station when terminal decoding capability information contains information on a receiver utilizing an interference signal itself.

Referring to FIG. 6B, at step S660, the first terminal and the second terminal may transmit the base station terminal information containing decoding capability information. Step S660 may be skipped.

The decoding capability information may include information on a receiver utilizing statistical properties of interference or information on a receiver utilizing an interference signal itself. In the present embodiment, the decoding capability information is assumed to include information on a receiver utilizing an interference signal itself.

Upon reception of terminal information, at step S670, the base station may determine the overlap related information that maximizes the first system performance (data rate or decoding probability) while satisfying the requirements of the second system based on the decoding capability information of the second system. The overlap related information may include at least one of collision region information, power information, overlapping/puncturing amount information, overlapping signal power information, puncturing information, and modulation information.

Specifically, to satisfy the reliability requirement and latency requirement of the second system, the base station may determine the puncturing amount information based on the second system requirements and the decoding capability information of the second terminal. Here, when one of the overlap amount information and the puncturing amount information is determined, the other thereof may be determined by use of information on the amount of resources in the collision region.

Additionally, to satisfy the reliability requirement and latency requirement of the second system, the base station may determine the puncturing information and overlapping signal information associated with a zone of the collision region where data overlapping or data puncturing is to be performed based on the second system requirements and the decoding capability information of the second terminal. The base station may determine the puncturing information and overlapping signal information so as to ease detection of an interference signal. In addition, the base station may examine the modulation information of each overlapping signal.

Upon determining the overlap related information, at step S680, the base station may transmit the terminal scheduling information containing the overlap related information. Here, the base station may select the overlap related information for the scheduling information in consideration of the decoding capability information of the terminal. For example, when the decoding capability information includes information on a receiver utilizing an interference signal itself, to enable the terminal to detect an interference signal, the base station may configure the overlap related information to include the collision region information, inter-service power information, puncturing information, and modulation information, and transmit scheduling information containing such overlap related information to the terminal. However, the present disclosure is not limited thereto or thereby. The scheduling information to be sent to the terminal may further include the overlapping signal power information and modulation information.

At step S680, the base station may transmit data to the terminal based on the overlap related information. The base station may transmit the first terminal and the second terminal overlapping data in the overlap region of the collision region based on the puncturing information contained in the overlap related information. The base station may puncture first terminal data in the non-overlap region of the collision region and transmit second terminal data based on the puncturing information.

At step S690, the terminal may receive data and decode the received data. In the case that the decoding capability information includes information on a receiver utilizing an interference signal itself, the first terminal and second terminal may use the puncturing information to group signals received in the collision region into overlapping signals and non-overlapping signals. That is, the first terminal and second terminal may distinguish between the overlap region of the collision region and the non-overlap region. Here, the non-overlap region may include both a portion of the collision region excluding the overlap region and the non-collision region. The first terminal and second terminal may use a receiver utilizing an interference signal itself (e.g. IAD or IC) to decode signals received in the overlap region. The first terminal and second terminal may use a receiver unconcerned about interference (e.g. GD) to decode signals received in the non-overlap region. Thereafter, the first terminal and second terminal may separate the desired signal and the interference signal based on decoded signals.

Meanwhile, in FIGS. 6A and 6B, the decoding capability information of the first terminal and the second terminal is described as containing either information on a receiver utilizing statistical properties of interference or information on a receiver utilizing an interference signal itself. However, the first terminal and the second terminal may have different decoding capability information. Next, a description is given of a case where the decoding capability information of the first terminal contains information on a receiver utilizing statistical properties of interference and the decoding capability information of the second terminal contains information on a receiver utilizing an interference signal itself.

The base station may determine the overlap related information in consideration of the decoding capability information of the first terminal and the second terminal. Specifically, the base station may determine the overlap related information that maximizes the first system performance (data rate or decoding probability) while satisfying the requirements of the second system based on the decoding capability information of the second system.

The base station may transmit the determined overlap related information to the first terminal and the second terminal. Here, when the overlap related information is sent through the shared control channel, the base station may transmit identical overlap related information.

On the other hand, when the overlap related information is sent to each terminal, the base station may transmit different overlap related information according to their decoding capability information of the first terminal and the second terminal.

In this case, the base station may transmit the overlap related information and inter-service power information to the first terminal; and the base station may transmit the puncturing information and overlapping signal power information to the second terminal in addition to the overlap related information and inter-service power information.

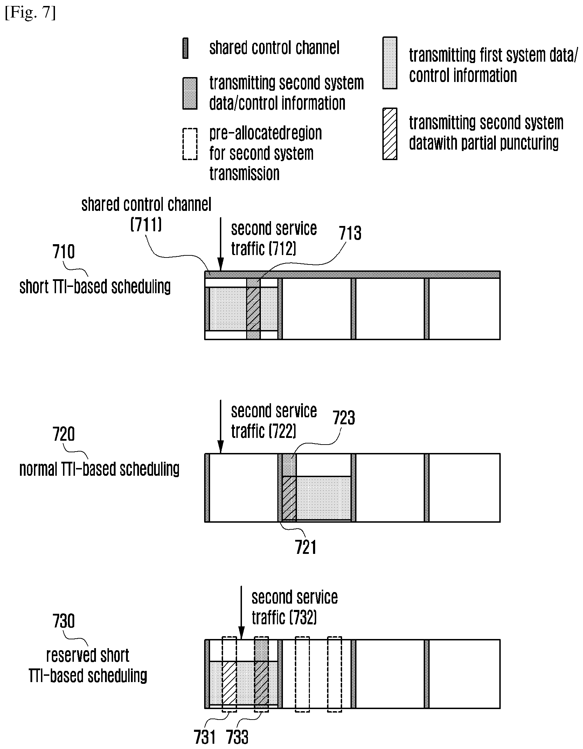

FIG. 7 illustrates a scheme of the base station to transmit scheduling information to a terminal according to an embodiment of the present disclosure.

To transmit a portion or the whole of the information that may be included in the overlap related information, such as collision region information, power information, and puncturing information, the base station may use a dedicated control channel shared in a TDM or FDM fashion or use a control resource region configurable in units of a long TTI at the initial attachment. Here, the shared control channel may be multiplexed in a TDM, FDM, or hybrid manner.

Alternatively, the base station may use several predefined regions to transmit the overlap related information, and the terminal may search the predefined regions for the overlap related information.

Data and control signals of the second system may be a subband signal, and the time unit thereof for resource allocation may be shorter than that of the first system.

In the present disclosure, for scheduling the overlap related information, it is possible to use one of the following three schemes.

The first scheme is related to short TTI-based scheduling as indicated by indicia 710. In the present disclosure, the second system services require high reliability and low latency like autonomous driving or e-health. Hence, when second service data is generated, it is necessary to allocate resources to the second service as quickly as possible for providing the second service.

In the first scheme, a separate resource may be used to indicate generation of second system data (or second system traffic 712). It is possible to transmit information indicating generation of second system data on the separate resource, and allocate resources to transmit second system data and control information (referred to as a second system resource region indicated by indicia 713). Hence, in the first scheme, the shared control channel 711 may be used as a resource indicating generation of second system traffic. Here, the base station may use the shared control channel 711 partitioned in the frequency domain (in a FDM manner) to indicate generation of second service traffic.

The base station may transmit information indicating a resource region allocated to the second service together with the information indicating generation of second service data. When the base station transmits the whole of the overlap related information through the shared control channel 711, the portion of the shared control channel 711 to be continuously monitored by the terminal may increase. This may increase the amount of information to be continuously monitored by the terminal, increasing battery power consumption and decreasing the amount of available resources. Hence, the base station may notify the location of the second system resource region through the shared control channel, and the terminal may identify the overlap related information through a control channel of the second system resource region.

As such, to notify the second system resource region, the base station may transmit the index of the second system resource region through the shared control channel 711.

The terminal may continuously monitor the shared control channel 711 to detect generation of second service data. The terminal may obtain information on the location of the second system resource region through the shared control channel 711. Hence, the terminal may decode a control signal sent through the control channel of the second system resource region to identify the overlap related information. Not only the second terminal but also the first terminal may decode a control signal sent through the control channel of the second system resource region to identify the overlap related information.

Accordingly, the first terminal and the second terminal may use the overlap related information to group resources to be used for data reception into resource zones, and may determine the receiver to be used based on the resource zones. The first terminal and the second terminal may use the receiver for a resource zone to decode received data.

The second scheme for scheduling the overlap related information is related to long TTI-based scheduling as indicated by indicia 720.

In the second scheme, when second system data (second system traffic 722) is generated, the base station may transmit the overlap related information as a portion of control information to be sent through a control channel 721 in the next TTI of the TTI (or subframe) where the second system data is generated. Here, the control channel 721 may include a control channel of the long TTI.

To meet the latency requirement of the second system, the base station may allocate resources for the second service (referred to as a second system resource region indicated by indicia 723) immediately after the control channel 721. In addition, to meet the latency requirement of the second system, the base station may reduce the length of the long TTI.

The terminal may decode control information received through the control channel 721 to identify the overlap related information.

Here, not only the second terminal but also the first terminal may decode control information received through the control channel 721 to identify the overlap related information.

Accordingly, the first terminal and the second terminal may use the overlap related information to group resources to be used for data reception into resource zones, and may determine the receiver to be used based on the resource zones. The first terminal and the second terminal may use the receiver for a resource zone to decode received data.

Unlike the first scheme, the second scheme does not define a separate shared control channel, and may transmit control information using the control channel region in a specific TTI.

The third scheme for scheduling the overlap related information is related to reserved short TTI-based scheduling as indicated by indicia 730.

In the third scheme, the base station may perform semi-persistent scheduling when allocating second system resources by reserving resources for the second service in consideration of the frequency of access to the second service.

When second system traffic 732 is generated, the base station may notify generation of second service data by using the control portion of the reserved resource region 733. Additionally, the base station may puncture first service data and perform overlapping based on the pre-agreed overlap related information. When the overlap related information is changed, the base station may transmit the changed overlap related information through the control portion of the reserved resource region 733. The base station may transmit overlap related information such as overlapping signal power information through the control portion.

The terminal may monitor the reserved resource region 731 or 733 to examine whether information indicating generation of second system traffic is received. When information indicating generation of second system traffic is received through the reserved resource region 733, the terminal may receive data according to the predetermined puncturing information. Here, not only the second terminal but also the first terminal may receive information indicating generation of second system traffic through the reserved resource region 733 and receive data according to the predetermined puncturing information.

Accordingly, the first terminal and the second terminal may use the puncturing information to group resources to be used for data reception into resource zones, and may determine the receiver to be used based on the resource zones. The first terminal and the second terminal may use the receiver for a resource zone to decode received data.

Alternatively, the terminal may decode control information received through the reserved resource region 731 or 733 to identify whether the overlap related information is received. When the overlap related information is received through the reserved resource region 733, the terminal may receive data according to the overlap related information. Here, not only the second terminal but also the first terminal may identify the overlap related information in the reserved resource region 733.

Accordingly, the first terminal and the second terminal may use the overlap related information to group resources to be used for data reception into resource zones, and may determine the receiver to be used based on the resource zones. The first terminal and the second terminal may use the receiver for a resource zone to decode received data.

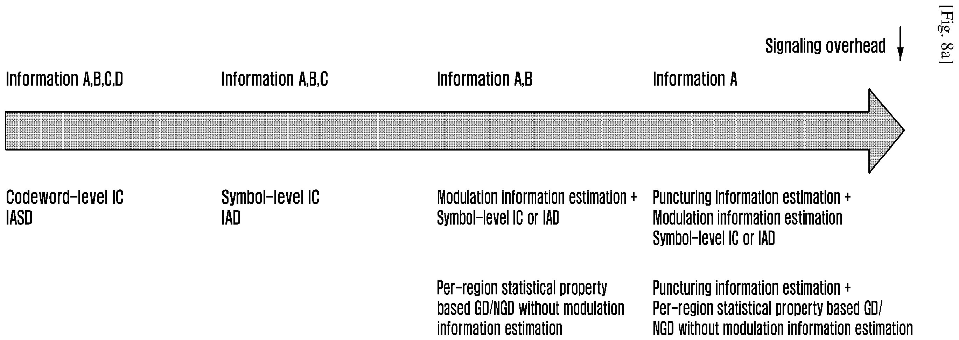

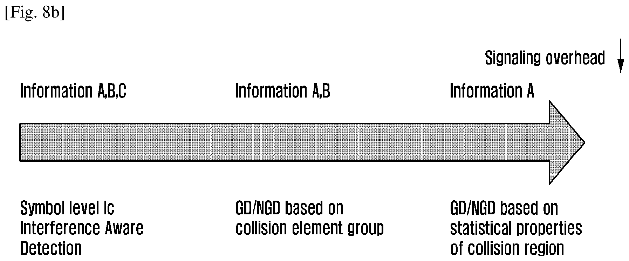

As described above, the base station may provide scheduling information to the terminal by use of the first to third schemes. The terminal may select a receiver according to the type of the received information and decode data in consideration of interference. This is described in detail with reference to FIGS. 8A and 8B.

FIG. 8A illustrates a scheme for the first terminal to receive data according to scheduling information from the base station.

The base station may notify the first terminal of at least one of the following information items.
A. Information on the collision region with the second system and inter-service power information
B. Puncturing information
C. Modulation information of the first system and/or transmission mode of the first terminal
D. Coding rate, total resource allocation information, and scrambling information of the first system

The terminal may use different receivers to remove interference according to the received information. Here, it is assumed that the first terminal has already received or is aware of the collision region information.

When the base station transmits information item A to the first terminal, the first terminal may select a receiver based on statistical properties of a resource zone without estimating the puncturing information and modulation information. Specifically, the first terminal may group resources into collision region resources (first group) and non-collision region resources (second group). The first terminal may use a receiver utilizing statistical properties of interference for the first group (e.g. NGD or complex generalized Gaussian distribution (CGGD)) and use a receiver unconcerned about interference for the second group (e.g. GD) to decode received data. In the following description, selection of a receiver based on statistical properties may include grouping resources into resource zones, selecting a receiver for each zone, and decoding data using the selected receivers. A detailed description thereof may be omitted.

However, when the first terminal includes a receiver utilizing an interference signal itself, the first terminal may estimate the puncturing information and modulation information and decode data using the receiver utilizing an interference signal itself (e.g. IC or IAD). Specifically, the first terminal may use the puncturing information to group resources into overlap region resources and non-overlap region resources. The first terminal may use the receiver utilizing an interference signal itself for signals received in the overlap region and use a receiver unconcerned about interference for signals received in the non-overlap region to receive and decode data. In the following description, decoding data based on a receiver utilizing an interference signal itself may include grouping resources into resource zones, selecting a receiver for each resource zone, and decoding data using the selected receivers. A detailed description thereof may be omitted.

When the base station transmits information items A and B to the first terminal, the first terminal may select a receiver based on statistical properties for each resource zone and decode data using the selected receiver without estimating the modulation information.

Alternatively, when the first terminal includes a receiver utilizing an interference signal itself, the first terminal may estimate the modulation information and decode data using the receiver utilizing an interference signal itself (e.g. IC or IAD).

When the first terminal includes a receiver utilizing an interference signal itself and the base station transmits information items A, B and C to the first terminal, the first terminal may decode data by use of the receiver utilizing an interference signal itself (e.g. IC or IAD).

When the first terminal includes a receiver utilizing an interference signal itself and the base station transmits information items A, B, C and D to the first terminal, the first terminal may decode data by use of the receiver utilizing an interference signal itself (e.g. IC or IAD).

Although the base station transmits information items A, B, C and D to the first terminal, if the first terminal does not include a receiver utilizing an interference signal itself, the first terminal may decode data by use of a receiver utilizing statistical properties of interference.

FIG. 8B illustrates a scheme for the second terminal to receive data according to scheduling information from the base station.

The base station may notify the second terminal of at least one of the following information items.
A. Information on the collision region with the first system and power information
B. Puncturing information
C. Modulation information of the first system and/or transmission mode of the first terminal

When the base station transmits information item A to the second terminal, the second terminal may select a receiver based on statistical properties of the collision region and decode data received using the selected receiver.

When the base station transmits information items A and B to the second terminal, the second terminal may group resources in the collision region, select a receiver for each resource group, and decode received data. That is, the second terminal may group collision region resources into overlap region resources and non-overlap zone resources, use a receiver utilizing statistical properties of interference for data received in the overlap region, and use a receiver unconcerned about interference for data received in the non-overlap region.

When the second terminal includes a receiver utilizing an interference signal itself and the base station transmits information items A, B and C to the second terminal, the second terminal may decode data by use of the receiver utilizing an interference signal itself (e.g. IC or IAD).

Here, the information item to be contained in the overlap related information may be changed according to whether the base station transmits the scheduling information via the shared control channel or together with second system control information. However, an indication to whether second service data is present at a particular symbol may be made via the shared control channel.

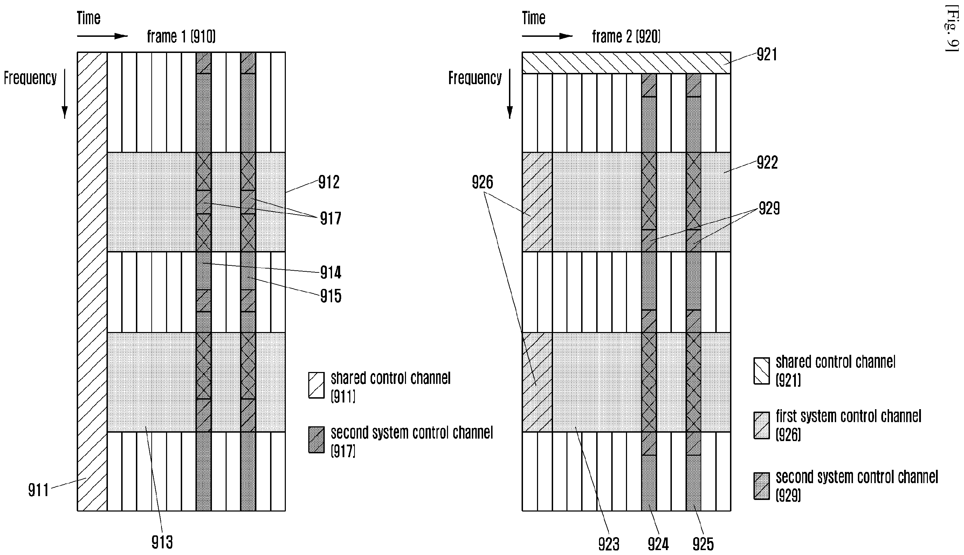

FIG. 9 illustrates a frame structure including a first system resource region and a second system resource region.

The control channel of the second system resource region may be localized or distributed in a short TTI.

In frame structure 1 (910), the shared control channel 911 may be located at one of frame partitions in the time domain. Control information for the first terminal and second terminal may be sent through the shared control channel 911. Such control information may include information regarding the first system resource region 912 or 913 and the second system resource region 914 or 915. Here, the first system resource region 912 and the first system resource region 913 may indicate resource regions allocated to different first terminals. Likewise, the second system resource region 914 and the second system resource region 915 may indicate resource regions allocated to different second terminals.

The control information for the second system may be sent through the control channel 917 of the second system resource region 914 or 915. For example, the overlap related information may be sent through the control channel 917. Or, the overlap related information may be sent through the shared control channel 911.

Meanwhile, in frame structure 2 (920), the shared control channel 921 may be located at one of frame partitions in the frequency domain. Control information for the first terminal and second terminal may be sent through the shared control channel 921. Such control information may include information regarding the first system resource region 922 or 923 and the second system resource region 924 or 925.

The control information for the first system may be sent through the first system control channel 926 of the first system resource region. The control information for the second system may be sent through the second system control channel 929 of the second system resource region. For example, the overlap related information may be sent through the first system control channel 926 or the second system control channel 929. Or, the overlap related information may be sent through the second system control channel, and the first terminal and the second terminal may identify the overlap related information by decoding control information. Or, the overlap related information may be sent through the shared control channel 921.

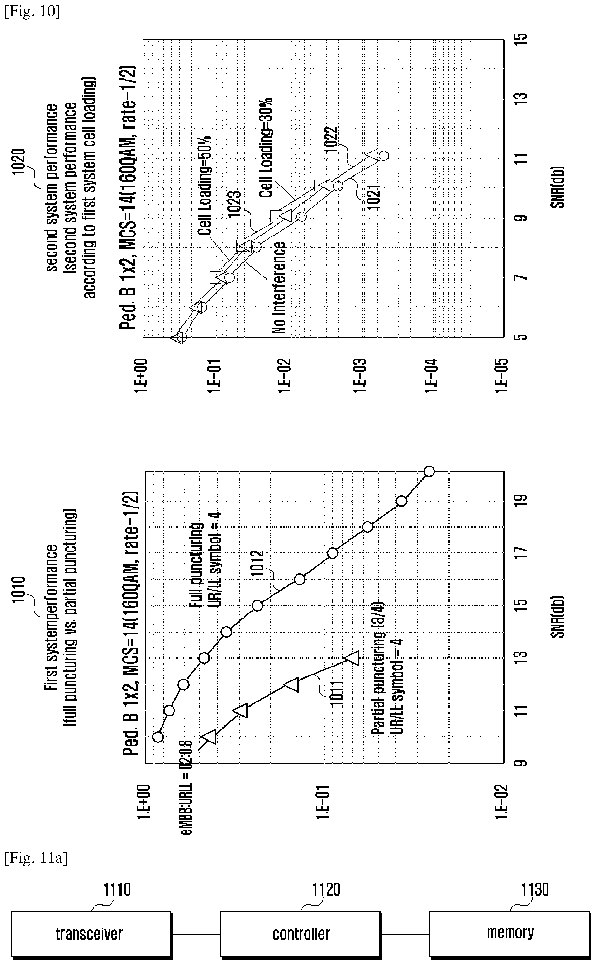

FIG. 10 illustrates system performance when the proposed method is applied.

In FIG. 10, diagram 1010 depicts the performance of the first system when the first system coexists with the second system.

In diagram 1010, graph 1012 indicates a case where first system data is fully punctured when second system data is generated; and graph 1011 indicates a case where a portion of first system data (3/4 puncturing) overlaps with second system data when second system data is generated. A comparison between graph 1011 and graph 1012 may reveal that the SNR value of graph 1012 is greater than that of graph 1011 at the same BLER value. In other words, it can be seen that first system performance is better when data partially overlaps than when all data is punctured.

Meanwhile, diagram 1020 depicts the performance of the second system when the first system coexists with the second system. Specifically, diagram 1020 depicts the performance of the second system according to the cell loading of the first system.

In diagram 1020, graph 1021 indicates a case where there is no interference (no data overlap); graph 1022 indicates a case where the cell loading is 30 percent; and graph 1023 indicates a case where the cell loading is 50 percent. A comparison between graphs 1021, 1022 and 1023 may reveal that second system performance does not degrade with the increasing cell loading.

In other words, it is possible to enhance first system performance without significant degradation of second system performance. That is, it is possible to secure available resources of the first system or the second system while utilizing the same resources of the second system. For example, referring to FIG. 10, it is possible to increase the available resources of the first system by 130 percent while allocating the same second system resources.

FIG. 11A is a block diagram of a base station according to an embodiment of the present disclosure.

Referring to FIG. 11A, the base station may include a transceiver (or communication unit) 1110, a controller (control unit) 1120, and a memory (storage unit) 1130. For example, when defining a controller in the specification, it may be stated that "the controller may be a circuit, an application-specific integrated circuit or at least one processor."

The transceiver1110 may communicate with a different network entity. The transceiver1110 may receive terminal information containing decoding capability information from a terminal, and may transmit scheduling information containing overlap related information to the terminal.

The controller 1120 may control the transceiver1110 to receive terminal information containing decoding capability information from a terminal.

The controller 1120 may control identifying or determining overlap related information for a first terminal of a first system employing a first TTI and a second terminal of a second system employing a second TTI different from the first TTI. The overlap related information may include at least one of collision region information, inter-service power information, puncturing amount information, overlapping signal power information, puncturing information, and modulation information.

Specifically, when a second service request is received from a second terminal or second service traffic is generated, to provide the second service, the controller 1120 may control allocating a portion of a resource region allocated to the first system to the second system. The controller 1120 may control determining overlap related information in those resources allocated to both the first system and the second system (referred to as a collision region).

Here, the controller 1120 may determine the overlap related information in consideration of decoding capability information received from the terminal and requirements of the second system. For example, when the decoding capability information includes information on a receiver that performs decoding by treating interference as noise or the base station has not received terminal information, the controller 1120 may increase the power ratio of the overlapping signal power information to ease separation of signals. The controller 1120 may determine the puncturing information and overlapping signal power information in such a way that statistical properties of interference are different from those of noise (e.g. making interference follow a non-Gaussian distribution). In addition, the controller 1120 may detect desired information and interference information jointly by use of modulation information as to interference itself.

A detailed description has been given above of determining the overlap related information according to the decoding capability information of the terminal, and a repeated description thereof will be omitted below.

After determining the overlap related information, the controller 1120 may control transmitting scheduling information containing the overlap related information to the terminal. The controller 1120 may control changing the information to be included in the scheduling information according to the decoding capability information of the terminal.

For example, when the decoding capability information includes information on a receiver utilizing statistical properties of interference, the controller 1120 may control transmitting scheduling information containing collision region information and inter-service power information only. On the other hand, when the decoding capability information includes information on a receiver utilizing an interference signal itself, the controller 1120 may control transmitting scheduling information which contains collision region information, inter-service power information, puncturing information, and modulation information. Here, the information included in the scheduling information may be changed.

To transmit scheduling information to the terminal, the controller 1120 may use at least one of the three schemes (short TTI based scheduling, long TTI based scheduling, and reserved short TTI based scheduling). A detailed description on these schemes is given above in connection with FIG. 7, and a repeated description thereon is omitted.

In addition, the controller 1120 may transmit data to the first terminal and second terminal based on the overlap related information.

Specifically, the controller 1120 may transmit first system data and second system data in an overlapping manner on a resource in the overlap region of the collision region. In addition, the controller 1120 may puncture first system data and transmit second system data only on a resource in the non-overlap region of the collision region.

The controller 1120 may control all operations of the base station performed in accordance with embodiments of the present disclosure.

The memory 1130 may store decoding capability information received from the terminal. The memory 1130 may store information regarding requirements of each system (e.g. second system requirements). The memory 1130 may store information regarding a reserved resource region, and store the puncturing information and overlap related information set in advance.

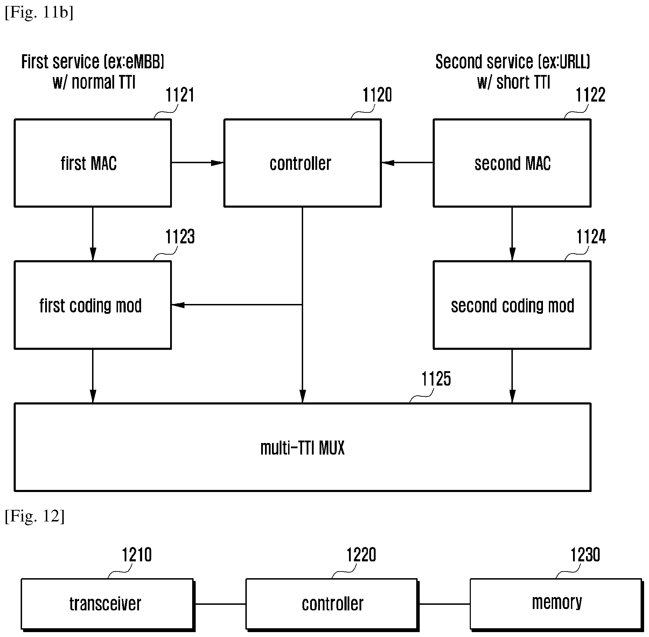

FIG. 11B illustrates a configuration of the scheduler according to an embodiment of the present disclosure.

The scheduler may be included in the controller of the base station or be included in the base station as a separate entity.

Referring to FIG. 11B, the scheduler may include a first MAC 1121, controller 1120, second MAC 1122, first coding/mod 1123, second coding/mod 1124, and multi-TTI MUX 1125.

When data is generated for the first service employing a long TTI, the first MAC 1121 may transmit the data to the controller 1120. When data is generated for the second service employing a short TTI, the second MAC 1122 may transmit the data to the controller 1120.

The controller 1120 may function in the same way as the controller of the base station. That is, the controller 1120 may determine the overlap related information by use of the decoding capability information received from the terminal. For example, in an environment where noise predominates over interference or cell loading is low for every service, the controller 1120 may set the overlap amount of the overlap related information to zero. The controller 1120 may determine the lower limit and upper limit of the overlap related information based on the latency requirement and reliability requirement of the second system. When the latency requirement of the second system is relatively strict and allows some slack time, the controller 1120 may change the modulation information (e.g. MCS) at the time for scheduling the existing service and schedule the terminal. In this case, the controller 1120 may puncture a portion of existing service resources and transmit existing service data and second service data in an overlapping manner according to the overlap related information (including puncturing amount information and puncturing information) determined when the latency requirement of the second service is relatively loose.

In addition, the controller 1120 may transmit data based on the overlap related information.

A description has been given above of operations of the controller 1120, and a repeated description thereof will be omitted.

The first coding/mod 1123 and the second coding/mod 1124 may encode first service data and second service data, respectively.

The multi-TTI MUX 1125 may multiplex first service data and second service data. Here, the first service and the second service have different TTIs. The multi-TTI MUX 1125 may multiplex data in an overlapping manner on some resources and map the multiplexed data to physical resources under the control of the controller 1120.

FIG. 12 illustrates a terminal according to an embodiment of the present disclosure.

Referring to FIG. 12, the terminal (terminal) may include a transceiver (or communication unit) 1210, a controller (or control unit) 1220, and a memory (storage unit) 1230. For example, when defining a controller in the specification, it may be stated that "the controller may be a circuit, an application-specific integrated circuit or at least one processor."

The transceiver1210 may communicate with a different network entity. The transceiver1210 may transmit terminal information containing decoding capability information of the terminal to the base station, and may receive scheduling information and data from the base station.

The controller 1220 may control transmitting terminal information containing decoding capability information to the base station. The controller 1220 may receive scheduling information from the base station and decode the scheduling information to identify overlap related information.

Specifically, the controller 1220 may decode control information received through the control channel of the long TTI (or subframe) to identify overlap related information contained in the control information. Or, the controller 1220 may monitor a separate shared control channel to identify whether second system traffic is generated, and may receive control information through a control channel of the allocated resource region to identify the overlap related information. Or, the controller 1220 may monitor a control channel of a reserved resource region to identify whether second system traffic is generated and overlap related information. A detailed description is given above in connection with FIG. 7, and a repeated description thereon is omitted.

After reception of overlap related information, the controller 1220 may group resources of the resource region based on the decoding capability information and overlap related information, and select receivers for individual resource groups to decode data.

When the terminal includes a receiver utilizing statistical properties of interference, the controller 1220 may group resources in the resource region into collision region resources and non-collision region resources by use of the collision region information contained in the overlap related information. The controller 1220 may use the receiver utilizing statistical properties of interference for the collision region and use a receiver unconcerned about interference for the non-collision region to receive and decode data. However, the controller 1220 may use the receiver utilizing statistical properties of interference for the whole resource region, without grouping resources, to receive and decode data.

When the terminal includes a receiver utilizing an interference signal itself, the controller 1220 may use the receiver to remove interference. To this end, the controller 1220 may identify the overlap region by use of the puncturing information contained in the overlap related information, and group resources of the allocated resource region into overlap region resources and non-overlap region resources. The controller 1220 may use the receiver utilizing an interference signal itself for the overlap region and use a receiver unconcerned about interference for the non-overlap region to receive and decode data.

Hence, the controller 1220 may detect an interference signal and detect a desired signal by using the interference signal.

The memory 1230 may store decoding capability information of the terminal. The memory 1230 may store the scheduling information received from the base station and identified overlap related information. In addition, the memory 1230 may store information regarding a reserved resource region, and store the puncturing information and overlap related information set in advance.

The scope of the invention is solely limited by the appended claims.

## Claims

1. A method performed by a base station in a communication system, the method comprising:
determining (S320) first information indicating first resources where first data for a first terminal and second data for a second terminal are to be transmitted and second information on a power ratio between a power for the first data and a power for the second data in the first resources, wherein the first resources are from among second resources where resources allocated to the first terminal and resources allocated to the second terminal overlap;
transmitting (S330), to the first terminal and the second terminal, control information including the first information and the second information; and
transmitting (S340), to the first terminal and the second terminal, the first data and the second data based on the control information,
wherein the control information indicates that the first terminal decodes the first data based on the power ratio identifying interference from the second data.

2. The method of claim 1,
wherein data for the first terminal is punctured in the second resources excluding the first resources,
wherein the first terminal is associated with an enhanced mobile broadband, eMBB, service, and
wherein the second terminal is associated with an ultra-reliable and low-latency communications, URLLC, service.

3. The method of claim 1,
wherein the control information further comprises at least one of third information indicating the second resource or modulation information for each of the first data and the second data,
wherein the control information is determined based on decoding capability information for each of the first terminal and the second terminal,
wherein the decoding capability information includes information on a receiver utilizing statistical properties of interference or information on a receiver utilizing an interference signal, and
wherein the control information is used by the first terminal to identify the first resources and to decode the first data transmitted on the first resources by considering the interference from the second data.

4. A method performed by a first terminal in a communication system, the method comprising:
receiving, from a base station, control information including first information indicating first resources where first data for the first terminal and second data for a second terminal is to be transmitted and second information on a power ratio between a power for the first data and a power for the second data in the first resources, wherein the first resources are from among second resources where resources allocated to the first terminal and resources allocated to the second terminal overlap;
identifying the first resources based on the control information;
receiving, from the base station, the first data and the second data on the first resources and;
decoding the first data based on the power ratio identifying interference from the second data.

5. The method of claim 4,
wherein data for the first terminal in the second resources excluding the first resources is punctured,
wherein the first terminal is associated with an enhanced mobile broadband, eMBB, service,
wherein the second terminal is associated with an ultra-reliable and low-latency communications, URLLC, service,
wherein the control information further comprises at least one of third information indicating the second resources and modulation information for each of the first data and the second data,
wherein the control information is determined based on decoding capability information for each of the first terminal and the second terminal, and
wherein the decoding capability information includes information on a receiver utilizing statistical properties of interference or information on a receiver utilizing an interference signal.

6. The method of claim 4, wherein identifying the first resources comprises:
grouping the resources allocated to the first terminal into a first group including the first resources and a second group including third resources excluding the first resources from the resources allocated to the first terminal based on the control information.

7. The method of claim 6, wherein decoding the first data comprises:
identifying a receiver associated with the first group; and
decoding the first data using the receiver by considering the interference from the second data.

8. A base station in a communication system, the base station comprising:
a transceiver (1110); and
a controller (1120) configured to:
determine first information indicating first resources where first data for a first terminal and second data for a second terminal are to be transmitted and second information on a power ratio between a power for the first data and a power for the second data in the first resources, wherein the first resources are from among second resources where resources allocated to the first terminal and resources allocated to the second terminal overlap,
transmit, to the first terminal and the second terminal via the transceiver, control information including the first information and the second information, and
transmit, to the first terminal and the second terminal via the transceiver, the first data and the second data based on the control information,
wherein the control information indicates that the first terminal decodes the first data based on the power ratio identifying interference from the second data.

9. The base station of claim 8,
wherein data for the first terminal is punctured in the second resources excluding the first resources,
wherein the first terminal is associated with an enhanced mobile broadband, eMBB, service, and
wherein the second terminal is associated with an ultra-reliable and low-latency communications, URLLC, service.

10. The base station of claim 8,
wherein the control information further comprises at least one of third information indicating the second resource or modulation information for each of the first data and the second data,
wherein the control information is determined based on decoding capability information for each of the first terminal and the second terminal,
wherein the decoding capability information includes information on a receiver utilizing statistical properties of interference or information on a receiver utilizing an interference signal, and
wherein the control information is used by the first terminal to identify the first resources and to decode the first data transmitted on the first resources by considering the interference from the second data.

11. A first terminal in a communication system, the first terminal comprising:
a transceiver (1210); and
a controller (1220) configured to:
receive, from a base station via the transceiver, control information including first information indicating first resources where first data for the first terminal and second data for a second terminal is to be transmitted and second information on a power ratio between a power for the first data and a power for the second data in the first resources, wherein the first resources are from among second resources where resources allocated to the first terminal and resources allocated to the second terminal overlap,
identify the first resources based on the control information,
receive, from the base station via the transceiver, the first data and the second data on the first resources, and
decode the first data based on the power ratio identifying interference from the second data.

12. The first terminal of claim 11,
wherein data for the first terminal in the second resources excluding the first resources is punctured,
wherein the first terminal is associated with an enhanced mobile broadband, eMBB, service,
wherein the second terminal is associated with an ultra-reliable and low-latency communications, URLLC, service,
wherein the control information further comprises at least one of third information indicating the second resources and modulation information for each of the first data and the second data,
wherein the control information is determined based on decoding capability information for each of the first terminal and the second terminal, and
wherein the decoding capability information includes information on a receiver utilizing statistical properties of interference or information on a receiver utilizing an interference signal.

13. The first terminal of claim 11, wherein the controller (1220) is configured to:
group the resources allocated to the first terminal into a first group including the first resources and a second group including third resources excluding the first resources from the resources allocated to the first terminal based on the control information.

14. The first terminal of claim 11, wherein the controller (1220) is configured to:
identify a receiver associated with the first group, and
decode the first data using the receiver by considering the interference from the second data.

## Patentansprüche

1. Verfahren, das von einer Basisstation in einem Kommunikationssystem durchgeführt wird, wobei das Verfahren Folgendes umfasst:
Bestimmen (S320) erster Informationen, die erste Ressourcen anzeigen, wo erste Daten für ein erstes Endgerät und zweite Daten für ein zweites Endgerät zu übertragen sind, und zweiter Informationen über ein Leistungsverhältnis zwischen einer Leistung für die ersten Daten und einer Leistung für die zweiten Daten in den ersten Ressourcen, wobei die ersten Ressourcen aus zweiten Ressourcen stammen, wo sich dem ersten Endgerät zugewiesene Ressourcen und dem zweiten Endgerät zugewiesene Ressourcen überschneiden;
Übertragen (S330) von Steuerinformationen, die die ersten Informationen und die zweiten Informationen enthalten, an das erste Endgerät und das zweite Endgerät; und
Übertragen (S340) der ersten Daten und der zweiten Daten basierend auf den Steuerinformationen an das erste Endgerät und das zweite Endgerät,
wobei die Steuerinformationen anzeigen, dass das erste Endgerät die ersten Daten basierend auf dem Leistungsverhältnis decodiert, das eine Interferenz von den zweiten Daten identifiziert.

2. Verfahren nach Anspruch 1,
wobei Daten für das erste Endgerät in den zweiten Ressourcen unter Ausschluss der ersten Ressourcen punktiert werden,
wobei das erste Endgerät mit einem verbesserten mobilen Breitband(eMBB)-Dienst verbunden ist, und
wobei das zweite Endgerät mit einem URLLC(höchst zuverlässige Kommunikation mit geringer Latenz)-Dienst verbunden ist.

3. Verfahren nach Anspruch 1,
wobei die Steuerinformationen ferner dritte Informationen, die die zweite Ressource anzeigen, und/oder Modulationsinformationen für sowohl die ersten als auch die zweiten Daten umfassen,
wobei die Steuerinformationen basierend auf den Decodierfähigkeitsinformationen für jedes des ersten und zweiten Endgeräts bestimmt werden,
wobei die Decodierfähigkeitsinformationen Informationen über einen Empfänger, der statistische Eigenschaften der Interferenz nutzt, oder Informationen über einen Empfänger, der ein Interferenzsignal nutzt, enthalten, und
wobei die Steuerinformationen von dem ersten Endgerät verwendet werden, um die ersten Ressourcen zu identifizieren und die auf den ersten Ressourcen übertragenen ersten Daten zu decodieren, indem die Interferenz von den zweiten Daten berücksichtigt wird.

4. Verfahren, das von einem ersten Endgerät in einem Kommunikationssystem durchgeführt wird, wobei das Verfahren Folgendes umfasst:
Empfangen von Steuerinformationen von einer Basisstation, die erste Informationen enthalten, die erste Ressourcen anzeigen, wo erste Daten für das erste Endgerät und zweite Daten für ein zweites Endgerät zu übertragen sind, und zweite Informationen über ein Leistungsverhältnis zwischen einer Leistung für die ersten Daten und einer Leistung für die zweiten Daten in den ersten Ressourcen, wobei die ersten Ressourcen zu den zweiten Ressourcen gehören, wo sich dem ersten Endgerät zugewiesene Ressourcen und dem zweiten Endgerät zugewiesene Ressourcen überschneiden;
Identifizieren der ersten Ressourcen basierend auf den Steuerinformationen;
Empfangen der ersten Daten und der zweiten Daten auf den ersten Ressourcen von der Basisstation und;
Decodieren der ersten Daten basierend auf dem Leistungsverhältnis, das Interferenzen mit den zweiten Daten identifiziert.

5. Verfahren nach Anspruch 4,
wobei Daten für das erste Endgerät in den zweiten Ressourcen unter Ausschluss der ersten Ressourcen punktiert werden,
wobei das erste Endgerät mit einem verbesserten mobilen Breitband(eMBB)-Dienst verbunden ist,
wobei das zweite Endgerät mit einem URLLC(höchst zuverlässige Kommunikation mit geringer Latenz)-Dienst verbunden ist,
wobei die Steuerinformationen ferner mindestens eine der folgenden Informationen umfassen: dritte Informationen, die die zweiten Ressourcen anzeigen, und Modulationsinformationen für sowohl die ersten Daten als auch die zweiten Daten,
wobei die Steuerinformationen basierend auf den Decodierfähigkeitsinformationen für jedes des ersten Endgeräts und des zweiten Endgeräts bestimmt werden, und
wobei die Decodierfähigkeitsinformationen Informationen über einen Empfänger, der statistische Eigenschaften der Interferenz nutzt, oder Informationen über einen Empfänger, der ein Interferenzsignal nutzt, enthalten.

6. Verfahren nach Anspruch 4, wobei das Identifizieren der ersten Ressourcen Folgendes umfasst:
Gruppieren der dem ersten Endgerät zugewiesenen Ressourcen in eine erste Gruppe, die die ersten Ressourcen enthält, und eine zweite Gruppe, die dritte Ressourcen enthält, unter Ausschluss der ersten Ressourcen von den dem ersten Endgerät zugewiesenen Ressourcen, basierend auf den Steuerinformationen.

7. Verfahren nach Anspruch 6, wobei das Decodieren der ersten Daten Folgendes umfasst:
Identifizieren eines Empfängers, der mit der ersten Gruppe verbunden ist; und
Decodieren der ersten Daten unter Verwendung des Empfängers unter Berücksichtigung der Interferenz von den zweiten Daten.

8. Basisstation in einem Kommunikationssystem, wobei die Basisstation Folgendes umfasst:
einen Transceiver (1110); und
eine Steuerung (1120), die konfiguriert ist, zum:
Bestimmen erster Informationen, die erste Ressourcen anzeigen, wo erste Daten für ein erstes Endgerät und zweite Daten für ein zweites Endgerät zu übertragen sind, und zweiter Informationen über ein Leistungsverhältnis zwischen einer Leistung für die ersten Daten und einer Leistung für die zweiten Daten in den ersten Ressourcen, wobei die ersten Ressourcen aus den zweiten Ressourcen stammen, wo sich dem ersten Endgerät zugewiesene Ressourcen und dem zweiten Endgerät zugewiesene Ressourcen überschneiden,
Übertragen von Steuerinformationen, die die ersten Informationen und die zweiten Informationen enthalten, an das erste Endgerät und das zweite Endgerät über den Transceiver, und
Übertragen der ersten Daten und der zweiten Daten an das erste Endgerät und das zweite Endgerät über den Transceiver basierend auf den Steuerinformationen,
wobei die Steuerinformationen anzeigen, dass das erste Endgerät die ersten Daten basierend auf dem Leistungsverhältnis decodiert, das eine Interferenz von den zweiten Daten identifiziert.

9. Basisstation nach Anspruch 8,
wobei Daten für das erste Endgerät in den zweiten Ressourcen unter Ausschluss der ersten Ressourcen punktiert werden,
wobei das erste Endgerät mit einem verbesserten mobilen Breitband(eMBB)-Dienst verbunden, und
wobei das zweite Endgerät mit einem URLLC(höchst zuverlässige Kommunikation mit geringer Latenz)-Dienst verbunden ist.

10. Basisstation nach Anspruch 8,
wobei die Steuerinformationen ferner dritte Informationen, die die zweite Ressource anzeigen, und/oder Modulationsinformationen für sowohl die ersten Daten als auch die zweiten Daten umfassen,
wobei die Steuerinformationen basierend auf Decodierfähigkeitsinformationen für jedes des ersten Endgeräts und des zweiten Endgeräts bestimmt werden,
wobei die Decodierfähigkeitsinformationen Informationen über einen Empfänger, der statistische Eigenschaften der Interferenz nutzt, oder Informationen über einen Empfänger, der ein Interferenzsignal nutzt, enthalten, und
wobei die Steuerinformationen von dem ersten Endgerät verwendet werden, um die ersten Ressourcen zu identifizieren und die auf den ersten Ressourcen übertragenen ersten Daten zu decodieren, indem die Interferenz von den zweiten Daten berücksichtigt wird.

11. Erstes Endgerät in einem Kommunikationssystem, wobei das erste Endgerät Folgendes umfasst:
einen Transceiver (1210); und
eine Steuerung (1220), die konfiguriert ist zum:
Empfangen von Steuerinformationen, die erste Informationen enthalten, die erste Ressourcen anzeigen, wo erste Daten für das erste Endgerät und zweite Daten für ein zweites Endgerät zu übertragen sind, von einer Basisstation über den Transceiver und zweite Informationen über ein Leistungsverhältnis zwischen einer Leistung für die ersten Daten und einer Leistung für die zweiten Daten in den ersten Ressourcen, wobei die ersten Ressourcen zu den zweiten Ressourcen gehören, wo sich dem ersten Endgerät zugewiesene Ressourcen und dem zweiten Endgerät zugewiesene Ressourcen überschneiden,
Identifizieren der ersten Ressourcen basierend auf den Steuerinformationen,
Empfangen der ersten Daten und der zweiten Daten auf den ersten Ressourcen von der Basisstation über den Transceiver, und
Decodieren der ersten Daten basierend auf dem Leistungsverhältnis, das eine Interferenz mit den zweiten Daten identifiziert.

12. Erstes Endgerät nach Anspruch 11,
wobei Daten für das erste Endgerät in den zweiten Ressourcen unter Ausschluss der ersten Ressourcen punktiert werden,
wobei das erste Endgerät mit einem verbesserten mobilen Breitband(eMBB)-Dienst verbunden ist,
wobei das zweite Endgerät mit einem URLLC(höchst zuverlässige Kommunikation mit geringer Latenz)-Dienst verbunden ist,
wobei die Steuerinformationen ferner dritte Informationen, die die zweiten Ressourcen anzeigen, und/oder Modulationsinformationen für sowohl die ersten Daten als auch die zweiten Daten umfassen,
wobei die Steuerinformationen basierend auf Decodierfähigkeitsinformationen für jedes des ersten Endgeräts und des zweiten Endgeräts bestimmt werden, und
wobei die Decodierfähigkeitsinformationen Informationen über einen Empfänger, der statistische Eigenschaften der Interferenz nutzt, oder Informationen über einen Empfänger, der ein Interferenzsignal nutzt, enthalten.

13. Erstes Endgerät nach Anspruch 11, wobei die Steuerung (1220) konfiguriert ist, zum:
Gruppieren der dem ersten Endgerät zugewiesenen Ressourcen in eine erste Gruppe, die die ersten Ressourcen enthält, und eine zweite Gruppe, die dritte Ressourcen enthält, unter Ausschluss der ersten Ressourcen von den dem ersten Endgerät zugewiesenen Ressourcen, basierend auf den Steuerinformationen.

14. Erstes Endgerät nach Anspruch 11, wobei die Steuerung (1220) konfiguriert ist zum:
Identifizieren eines Empfängers, der mit der ersten Gruppe verbunden ist, und
Decodieren der ersten Daten unter Verwendung des Empfängers unter Berücksichtigung der Interferenz von den zweiten Daten.

## Revendications

1. Procédé effectué par une station de base dans un système de communication, le procédé comprenant :
déterminer (S320) une première information indiquant des premières ressources où des premières données pour un premier terminal et des deuxièmes données pour un deuxième terminal doivent être transmises et une deuxième information sur un rapport de puissance entre une puissance pour les premières données et une puissance pour les deuxièmes données dans les premières ressources, où les premières ressources sont parmi des deuxièmes ressources où des ressources attribuées au premier terminal et des ressources attribuées au deuxième terminal se chevauchent ;
transmettre (S330), au premier terminal et au deuxième terminal, des informations de commande incluant la première information et la deuxième information ; et
transmettre (S340), au premier terminal et au deuxième terminal, les premières données et les deuxièmes données sur la base des informations de commande,
où les informations de commande indiquent que le premier terminal décode les premières données sur la base du rapport de puissance identifiant des interférences des deuxièmes données.

2. Procédé selon la revendication 1,
où des données pour le premier terminal sont perforées dans les deuxièmes ressources excluant les premières ressources,
où le premier terminal est associé à un service de large bande mobile évolué, eMBB, et
où le deuxième terminal est associé à un service de communications de faible latence et ultra-fiable, URLLC.

3. Procédé selon la revendication 1,
où les informations de commande comprennent en outre au moins l'une entre une troisième information indiquant la deuxième ressource ou une information de modulation pour chacune des premières données et des deuxièmes données,
où les informations de commande sont déterminées sur la base des informations de capacité de décodage pour chacun du premier terminal et du deuxième terminal,
où les informations de capacité de décodage incluent des informations sur un récepteur utilisant des propriétés statistiques d'interférence ou des informations sur un récepteur utilisant un signal d'interférence, et
où les informations de commande sont utilisées par le premier terminal pour identifier les premières ressources et pour décoder les premières données transmises sur les premières ressources en considérant l'interférence des deuxièmes données.

4. Procédé effectué par un premier terminal dans un système de communication, le procédé comprenant :
recevoir, d'une station de base, des informations de commande incluant une première information indiquant des premières ressources où des premières données pour le premier terminal et des deuxièmes données pour un deuxième terminal doivent être transmises et une deuxième information sur un rapport de puissance entre une puissance pour les premières données et une puissance pour les deuxièmes données dans les premières ressources, où les premières ressources sont parmi des deuxièmes ressources où des ressources attribuées au premier terminal et des ressources attribuées au deuxième terminal se chevauchent,
identifier les premières ressources sur la base des informations de commande ;
recevoir, de la station de base, les premières données et les deuxièmes données sur les premières ressources et ;
décoder les premières données sur la base du rapport de puissance identifiant des interférences des deuxièmes données.

5. Procédé selon la revendication 4,
où des données pour le premier terminal dans les deuxièmes ressources excluant les premières ressources sont perforées,
où le premier terminal est associé à un service de large bande mobile évolué, eMBB,
où le deuxième terminal est associé à un service de communications de faible latence et ultra-fiable, URLLC,
où les informations de commande comprennent en outre au moins l'une entre une troisième information indiquant les deuxièmes ressources et une information pour chacune des premières données et les deuxièmes données,
où les informations de commande sont déterminées sur la base des informations de capacité de décodage pour chacun du premier terminal et du deuxième terminal, et
où les informations de capacité de décodage incluent des informations sur un récepteur utilisant des propriétés statistiques d'interférence ou des informations sur un récepteur utilisant un signal d'interférence.

6. Procédé selon la revendication 4, où l'identification des premières ressources comprend :
grouper les ressources attribuées au premier terminal dans un premier groupe incluant les premières ressources et un deuxième groupe incluant des troisièmes ressources excluant les premières ressources des ressources attribuées au premier terminal sur la base des informations de commande.

7. Procédé selon la revendication 6, où le décodage des premières données comprend :
identifier un récepteur associé au premier groupe ; et
décoder les premières données utilisant le récepteur en considérant les interférences des deuxièmes données.

8. Station de base dans un système de communication, la station de base comprenant :
un émetteur-récepteur (1110) ; et
un contrôleur (1120) configuré pour :
déterminer une première information indiquant des premières ressources où des premières données pour un premier terminal et des deuxièmes données pour un deuxième terminal doivent être transmises et une deuxième information sur un rapport de puissance entre une puissance pour les premières données et une puissance pour les deuxièmes données dans les premières ressources, où les premières ressources sont parmi des deuxièmes ressources où des ressources attribuées au premier terminal et des ressources attribuées au deuxième terminal se chevauchent,
transmettre, au premier terminal et au deuxième terminal via l'émetteur-récepteur, des informations de commande incluant la première information et la deuxième information, et
transmettre, au premier terminal et au deuxième terminal via l'émetteur-récepteur, les premières données et les deuxièmes données sur la base des informations de commande,
où les informations de commande indiquent que le premier terminal décode les premières données sur la base du rapport de puissance identifiant les interférences des deuxièmes données.

9. Station de base selon la revendication 8,
où des données pour le premier terminal sont perforées dans les deuxièmes ressources excluant les premières ressources,
où le premier terminal est associé à un service de large bande mobile évolué, eMBB, et
où le deuxième terminal est associé à un service de communications de faible latence et ultra-fiable, URLLC.

10. Station de base selon la revendication 8,
où les informations de commande comprennent en outre au moins l'une entre une troisième information indiquant les deuxièmes ressources ou une information pour chacune des premières données et des deuxièmes données,
où les informations de commande sont déterminés sur la base d'informations de capacité de décodage pour chacun du premier terminal et du deuxième terminal,
où les informations de capacité de décodage incluent des informations sur un récepteur utilisant des propriétés statistiques d'interférence ou des informations sur un récepteur utilisant un signal d'interférence, et
où les informations de commande sont utilisées par le premier terminal pour identifier les premières ressources et pour décoder les premières données transmises sur la première ressources en considérant les interférences des deuxièmes données.

11. Premier terminal dans un système de communication, le premier terminal comprenant :
un émetteur-récepteur (1210) ; et
un contrôleur (1220) configuré pour :
recevoir, d'une station de base via l'émetteur-récepteur, des informations de commande incluant une première information indiquant des premières ressources où des premières données pour le premier terminal et des deuxièmes données pour un deuxième terminal doivent être transmises et une deuxième information sur un rapport de puissance entre une puissance pour les premières données et une puissance pour les deuxièmes données dans les premières ressources, où les premières ressources sont parmi des deuxièmes ressources où des ressources attribuées au premier terminal et des ressources attribuées au deuxième terminal se chevauchent,
identifier les premières ressources sur la base des informations de commande,
recevoir, de la station de base via l'émetteur-récepteur, les premières données et les deuxièmes données sur les premières ressources, et
décoder les premières données sur la base du rapport de puissance identifiant les interférences des deuxièmes données.

12. Premier terminal selon la revendication 11,
où des données pour le premier terminal dans les deuxièmes ressources excluant les première ressources sont perforées,
où le premier terminal est associé à un service de large bande mobile évolué, eMBB,
où le deuxième terminal est associé à un service de communications de faible latence et ultra-fiable, URLLC,
où les informations de commande comprennent en outre au moins l'une entre une troisième information indiquant les deuxièmes ressources et une information de modulation pour chacune des premières données et des deuxièmes données,
où les informations de commande sont déterminées sur la base des informations de capacité de décodage pour chacun du premier terminal et le deuxième terminal, et
où les informations de capacité de décodage incluent des informations sur un récepteur utilisant des propriétés statistiques d'interférence ou des informations sur un récepteur utilisant un signal d'interférence.

13. Premier terminal selon la revendication 11, où le contrôleur (1220) est configuré pour :
grouper les ressources attribuées au premier terminal dans un premier groupe incluant les premières ressources et un deuxième groupe incluant des troisièmes ressources excluant les premières ressources des ressources attribuées au premier terminal sur la base des informations de commande.

14. Premier terminal selon la revendication 11, où le contrôleur (1220) est configuré pour :
identifier un récepteur associé au premier groupe, et
décoder les premières données utilisant le récepteur en considérant l'interférence des deuxièmes données.
